Europäisches Patentamt

European Patent Office

Office européen des brevets

(11) Publication number: **0 286 681**
A1

# EUROPEAN PATENT APPLICATION

published in accordance with Art. 158(3) EPC

(21) Application number: **87904315.6**

(22) Date of filing: **02.07.87**

Data of the international application taken as a basis:

(86) International application number:
**PCT/JP 87/00461**

(87) International publication number:
**WO 88/00511 (28.01.88 88/3)**

(51) Int. Cl.⁴: **B 23 Q  17/10**, B 23 Q  17/22

(30) Priority: **10.07.86 JP 160858/86**

(43) Date of publication of application: **19.10.88**
**Bulletin 88/42**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **NAKAMURA, Kousei, 1-2-8, Asahigaoka Hino-shi, Tokyo 191 (JP)**
Inventor: **TOKUOKA, Yuji, Fanuc Utsugiryo 386-1, Ishikawacho, Hachioji-shi Tokyo 192 (JP)**

(74) Representative: **Allman, Peter John et al, MARKS & CLERK Suite 301 Sunlight House Quay Street, Manchester M3 3JY (GB)**

(54) **SPINDLER MOTOR HAVING BUILT-IN ROTATIONAL POSITION SENSING DEVICE.**

(57) An output shaft (10) of a spindle motor for use in rotating a spindle of a machine tool is provided on its one end portion with not only a toothed plate (12) for detecting the rotational speed of the output shaft (10) but also a toothed plate (14) for detecting the rotational position thereof, and has a rotational speed sensing element (16) and a rotational position sensing element (18) which are operated in cooperation with the respective toothed plates. Since a rotational position sensing device is thus provided in the spindle motor, the space around the spindle can be saved. In addition, since the rotational position sensing device is directly connected to the output shaft (10) of the spindle motor, the rotational position of the spindle motor can be detected even when the output shaft is rotated at a high speed.

DESCRIPTION

TITLE OF THE INVENTION

Spindle Motor with Built-in Rotational Position Detector

TECHNICAL FIELD

The present invention relates to a spindle motor with a built-in rotational position detector for detecting the rotational position of the spindle of a machine tool.

BACKGROUND ART

The spindle of a machine rotates a tool or a work held at the free end thereof. The spindle motor is a driving device for rotatively driving the spindle of a machine tool, and rotates the spindle directly or through a transmission mechanism. Conventionally, the rotational speed of the spindle is controlled for machining a work and a rotational speed detector is attached to one end of the output shaft of the spindle motor for controlling the rotational speed of the spindle.

The rotational position of the spindle, in addition to the rotational speed of the same, must be detected during a machining operation, for example, precision threading when cutting a screw. To meet such a requirement, generally the rotational position of the spindle is transmitted to a rotational position detector through a timing belt, namely, a toothed belt, extended around a toothed pulley fixed to one end of the spindle.

However, such a rotational position detecting system for detecting the rotational position of the spindle requires a space for accommodating the toothed pulleys, the toothed belt, and the rotational position detector, causing an increase in the size of the spindle head, and requires extra work for the maintenance and inspection of the toothed belt. Furthermore, since the rotational speed of the spindle of the machine tool has been increased remarkably, the toothed belt tends to be slackened by the centrifugal force, reducing the accuracy of detection of the rotational position of the spindle or making the detection of the rotational position of the spindle impossible.

DISCLOSURE OF THE INVENTION

Accordingly, an object of the present invention is to provide a spindle motor with a built-in rotational position detector, eliminating an additional rotational position detecting system for detecting the rotational position of the spindle of a machine tool, including a position detector, toothed pulleys and a toothed belt, eliminating work for the maintenance and inspection of a belt, capable of accurately detecting the rotational position of the spindle while the spindle is rotated at a high rotational speed, and reducing the space necessary for detecting the rotational position of the spindle.

In view of the foregoing object of the invention, the present invention provides a spindle motor with a built-in rotational position detector, characterized in that a rotational speed detecting toothed plate for detecting the rotational speed of the output shaft is fixed to one end thereof, a rotational position detecting toothed plate is fixedly provided near the rotational speed detecting toothed plate on the output shaft, a rotational speed detecting element is operatively associated with the rotational speed detecting toothed plate, and a rotational position detecting element is operatively associated with the rotational position detecting toothed plate. Since the rotational position detecting toothed plate is fixed directly to the motor output shaft without using a belt or the like, the rotational position of the spindle of the machine tool can be accurately detected even if the rotational speed of the output shaft is very high or low. Furthermore, since the rotational position detecting toothed plate and the rotational position detecting element are provided within the housing of the spindle motor, the spindle head of the machine tool can be formed in a compact construction.

BRIEF DESCRIPTION OF THE DRAWINGS

Figure 1 is a longitudinal sectional view of a spindle motor with a built-in rotational position detector, embodying the present invention;

Figure 2 is an illustration of a modification of a part A of the spindle motor with a built-in rotational position detector of Fig. 1;

Figure 3 is an illustration showing the conventional disposition of a spindle, a spindle motor for rotatively driving the spindle, and a rotational position detector for detecting the rotational position of the spindle on a machine tool.

BEST MODE FOR CARRYING OUT THE INVENTION

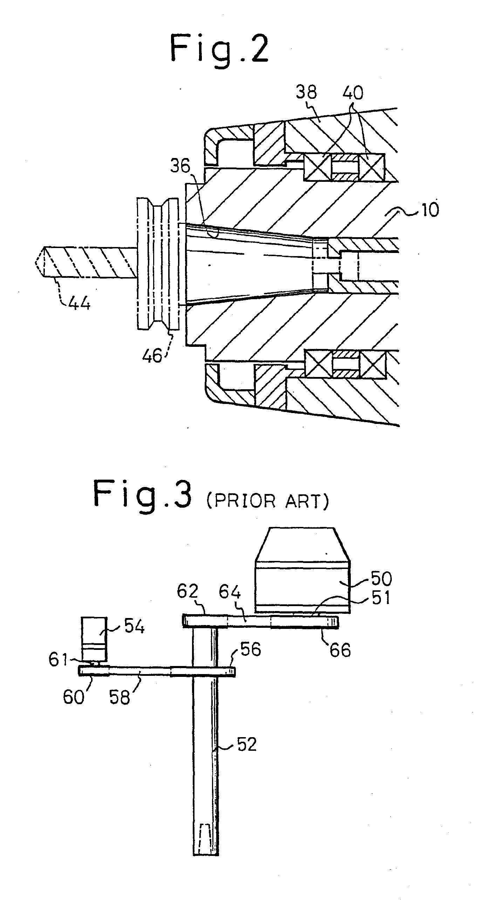

Prior to the description of the embodiment of the present invention, the conventional disposition of a spindle, a spindle motor for rotatively driving the spindle, and a rotational position detector for detecting the rotational position of the spindle on a machine tool will be described with reference to Fig. 3. A toothed pulley 62 is fixed to one end of a spindle 52, a toothed pulley 66 is fixed to the output shaft 51 of a spindle motor 50, and a toothed timing belt 64 is extented between the toothed pulleys 62 and 66 to transmit the rotation of the toothed pulley 66 to the toothed pulley 62. The rotational position of the rotating spindle 52 is detected by a rotational position detector 54. A toothed pulley 60 is fixed to a rotary shaft 61 included in the rotational position detector 54 at the front end of the rotational position detector 54. A timing belt 58 is extended between the toothed pulley 60 and another toothed pulley 56 fixed to the spindle 52 to transmit the rotation of the toothed pulley 56 to the toothed pulley 60. Thus, the rotational position of the spindle 52 of the machine tool is detected through the belt. In some cases, the rotation of the motor is transmitted to the spindle of the machine tool by a transmission gear mechanism instead of such a transmission belt mechanism.

However, such a rotational position detecting system for detecting the rotational position of the spindle requires a space for accommodating the toothed pulleys, the toothed belts, and the rotational position detector therein, increases the size of the spindle head, and incurs work for the maintenance and inspection of the toothed belts. Furthermore, since the rotational speed of the spindle of the machine tool has been increased remarkably, the toothed belts tend to be slackened by centrifugal force, deteriorating the accuracy when detecting the rotational position of the spindle or making the detection of the rotational position of the spindle impossible.

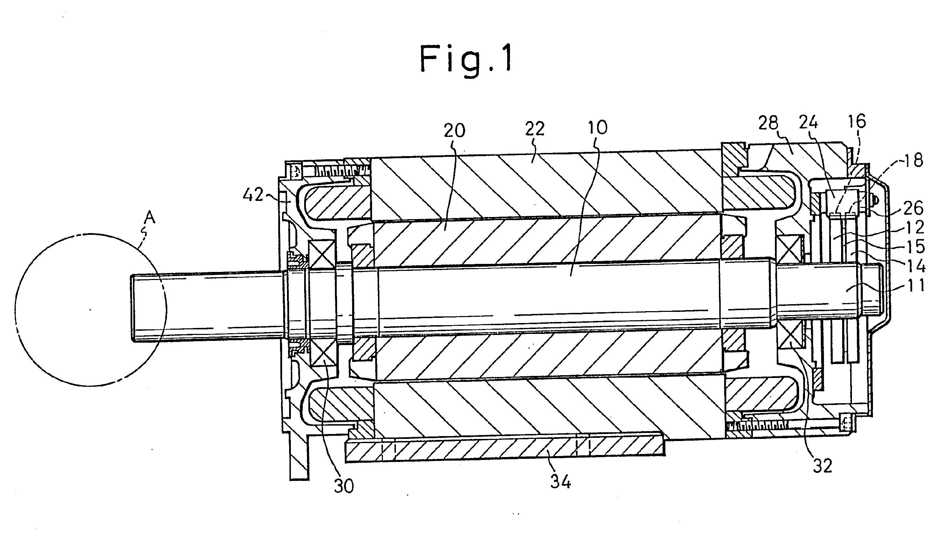

An improved spindle motor with a built-in rotational position detector invented in view of the foregoing problems will be described with reference to Fig. 1. A rotor 20 is fixedly supported on an output shaft 10 for rotation within the confines of a stator 22. The output shaft 20 is supported rotatably in bearings 30 and 32 respectively provided on a front housing 42 and a rear housing 28 which are fastened to the stator 22 with bolts (or screws). A rotational speed detecting toothed plate (rotational speed detecting gear) 12 for detecting the rotational speed of the output shaft 10 is fastened to the rear end 11 of the output shaft 10 by shrink fitting. A cylindrical detector 24 is held fixedly by a suitable holding member 26 fixed to the rear housing 28 of the motor so that a small gap (in this embodiment, 0.15 mm) is formed between the rotational speed detecting gear 12 and the detector 24. A rotational speed detecting element 16 comprising a known magnetic reluctance element is buried in the bottom surface of the detector 24 facing the rotational speed detecting gear 12. The rotational speed detecting element 16 detects the rotational speed of the output shaft 10 in cooperation with the rotational speed detecting gear 12.

A rotational position detecting toothed plate (rotational position detecting gear) 14 having a spacing portion 15 is fastened to the rear end 11 of the output shaft 10 by shrink fitting. The rotational position detecting gear 14 has the same outside diameter as the rotational speed detecting gear 12. In this embodiment, the rotational position detecting gear 14 is disposed opposite to the bottom surface of the detector 24 with a gap of 0.15 mm therebetween. A rotational position detecting element 18 consisting of a magnetic reluctance element similar to the rotational speed detecting element is buried in the bottom surface of the detector 24 facing the rotational position detecting gear 14. The rotational position detecting element 18 detects the rotational position of the output shaft 10 in cooperation with the rotational position detecting gear 14. The spacing portion 15 of the rotational position detecting gear 14 must have a predetermined thickness capable of separating the rotational speed detecting gear 12 and the rotational position detecting gear 14 from each other so that the rotational speed detecting gear 12 or the rotational position detecting gear 14 will not affect a detecting operation of the rotational position detecting element 18 or the rotational speed detecting element 16, respectively. The spacing portion 15 may be substituted by an individual spacer separated from the rotational position detecting gear 14.

The spindle motor thus incorporating a rotational speed detector and a rotational position detector is able to detect the rotational speed and rotational position of the output shaft 10 accurately even while the output shaft 10 is rotating at a high rotational speed, because the spindle motor does not need a belt for detecting the rotational speed and rotational position of the output shaft 10. As mentioned above, since the rotational speed detecting gear 12 and the rotational position detecting gear 14 are fixedly adjacently mounted on the output shaft 10, the rotational speed detector and the rotational position detector can be provided within the motor in a compact arrangement scarcely varying the size of the spindle motor and saving space around the spindle. A member 34 is a bracket to be attached to the machine tool for fixedly supporting the spindle motor on the machine tool.

The output shaft 10 of the spindle motor may be formed so as to hold directly a tool or a tool holder at the front end thereof. In such a case, the output shaft 10 of the spindle motor serves as the spindle of the machine tool. Figure 2 illustrates a modification of the extremity of the output shaft 10. In this modification, the output shaft 10 is supported rotatably at the front end thereof in a bearing 40 provided on the housing 38 of the spindle head. A tapered hole 36 is formed in the front end of the output shaft 10 coaxially with the output shaft 10 to firmly receive a tool holder 46 fixedly holding a tool 44 therein.

As apparent from the foregoing description, the present invention provides a spindle motor with a built-in rotational position detector, eliminating the transmission belt mechanism for detecting the rotational position of the spindle of a machine tool, which system consists of the toothed pulleys and the timing belts, incorporating the rotational position detector for detecting the rotational position of the spindle within the spindle motor to save space around the spindle of the machine tool, eliminating work for the maintenance and inspection of the belts, and capable of detecting

00286681

the rotational position of the spindle while rotating at
a high rotational speed.

8                    00286681

LIST OF REFERENCE NUMERALS

10 ................ Output shaft
11 ................ Rear end of the output shaft
12 ................ Rotational speed detecting toothed
                   plate
14 ................ Rotational position detecting toothed
                   plate
15 ................ Spacing portion
16 ................ Rotational speed detecting element
18 ................ Rotational position detecting element
20 ................ Rotor
22 ................ Stator
24 ................ Detector
26 ................ Holding member for holding the
                   detector
28 ................ Rear housing
30, 32, 40 ....... Bearings
34 ................ Bracket
36 ................ Tapered hole
38 ................ Housing of the spindle head
42 ................ Front housing
44 ................ Tool
46 ................ Tool holder
50 ................ Spindle motor
51 ................ Output shaft
52 ................ Spindle
54 ................ Rotational position detector
56, 60, 62, 66 ... Toothed pulleys
58, 64 ........... Toothed timing belts

## CLAIMS

1. A spindle motor with a built-in rotational position detector, comprising:

a stator;

a rotor capable of rotating relatively to said stator;

an output shaft fixed to said rotor rotatable together with the rotor;

a rotational speed detecting toothed plate for detecting the rotational speed of said output shaft, fixed to one end of said output shaft;

a rotational speed detecting element disposed opposite to and operatively associated with said rotational speed detecting toothed plate;

a rotational position detecting toothed plate for detecting the rotational position of said output shaft, fixed to said output shaft adjacent to said rotational speed detecting toothed plate; and

a rotational position detecting element disposed opposite to and operatively associated with said rotational position detecting toothed plate.

2. A spindle motor with a built-in rotational position detector, according to claim 1, wherein an outer diameter dimension of said rotational position detecting toothed plate is the same as that of said rotational speed detecting toothed plate.

3. A spindle motor with a built-in rotational position detector, according to claim 1, wherein said output shaft is provided at the other end thereof with a holding means for holding a tool or a work.

Fig.1

# Fig.2

# Fig.3 (PRIOR ART)

# INTERNATIONAL SEARCH REPORT $0028568\,\hat{1}$

International Application No . PCT/JP87/00461

## I. CLASSIFICATION OF SUBJECT MATTER (if several classification symbols apply, indicate all) 3

According to International Patent Classification (IPC) or to both National Classification and IPC

Int.Cl$^4$     B23Q17/10, B23Q17/22

## II. FIELDS SEARCHED

| Minimum Documentation Searched + | |
|---|---|
| Classification System : | Classification Symbols |
| IPC | B23Q5/04, B23Q16/02, B23Q17/10, B23Q17/22 |

| Documentation Searched other than Minimum Documentation to the Extent that such Documents are Included in the Fields Searched 5 | |
|---|---|
| Jitsuyo Shinan Koho | 1926 - 1987 |
| Kokai Jitsuyo Shinan Koho | 1971 - 1987 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| Y | JP, A, 57-205053 (MAHO Werkzeugmaschinenbau Babel & Co.) 16 December 1982 (16. 12. 82) & EP, A, 64741 & DE, A, 3118141 | 1-3 |
| Y | JP, U, 57-81041 (Kogyo Gijutsuin-cho) 19 May 1982 (19. 05. 82) | 1-3 |

* Special categories of cited documents: 15
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure. use. exhibition or other means
"P" document published prior to the international filing date but later than the priority date claimed

"T" later document published after the international filing date or priority date and not in conflict with the application but cited to understand the principle or theory underlying the invention
"X" document of particular relevance: the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search 2 | Date of Mailing of this International Search Report 2 |
|---|---|
| September 16, 1987 (16. 09. 87) | September 28, 1987 (28. 09. 87) |
| International Searching Authority 1 | Signature of Authorized Officer 20 |
| Japanese Patent Office | |

Form PCT/ISA/210 (second sheet) (October 1977)